# EUROPEAN PATENT SPECIFICATION

(11) **EP 0 893 486 B1**
(45) Date of publication and mention of the grant of the patent: **18.12.2002**
(21) Application number: 97830387.3
(22) Date of filing: 24.07.1997
(51) Int. Cl.: C09K 17/22, C04B 41/48, C09K 17/48

(54) **Acrylic compositions for consolidation of soils and concrete in general**
Acrylzusammensetzungen für Boden- und Zementverfestigung im allgemeinen
Compositions acryliques pour la consolidation de sols et de ciment en général

(43) Date of publication of application: 27.01.1999
(73) Proprietor: Draco Italiana S.p.A., 20121 Milano (IT)
(72) Inventor: Pasqualini, Angelo, 24060 San Paolo D'Argon (Bergamo) (IT)
(74) Representative: Tansini, Elio Fabrizio

(56) References cited:
- EP-A- 0 470 008
- FR-A- 2 375 288
- JP-A- 53 019 615
- US-A- 4 295 762
- PATENT ABSTRACTS OF JAPAN vol. 009, no. 001 (C-259), 5 January 1985 & JP 59 157174 A (KOUYOU KASEI KK), 6 September 1984,

## Description

The present invention relates to an acrylic composition for consolidation of soils and concrete in general.

The technology for consolidating soils and concrete conglomerates in general known in the prior art provides for the injection of reactive chemical products which, once polymerised, bring about, through their cross-linking or gelling, a reduction in water permeability and a consolidation in the permeated substances. For said purpose it is possible to use both reactive inorganic products and reactive organic products, as well as mixtures thereof.

Among inorganic mixtures, well known are those based on cement and bentonite, very fine hydraulic binders and/or those based on silicates.

European Patent No. 178213 B describes for instance the use of said inorganic systems, constituted mainly of different ratios of finely subdivided silica and lime. The use of inorganic compositions based on magnesium phosphate, magnesium oxide and carboxylic acids (as cross-linking retardants) for concrete consolidation is described in European Patent 218363 A. In European Patent No. 192533 the compositions claimed for consolidation of the soil and of geological conformation in general are based on alkaline silicates combined with a gelling agent and surface-active agents. The gelling agent can be an alkydic ester of carboxylic acid or a dialkyl or a trialkylphosphate, a lactone, a low molecular weight acrylamide or a ketoester. The surface-active agent can be for instance a mixture of alkylsulphonic esters of C₄-C₃₀ acids or alkaline alkyl or alkenylsulphonates.

The Patent FR 7916368 describes organic compositions for consolidation which can be polymerised, comprising water-soluble ethylenic monomers having at least one alcoholic group and catalysts based on an organic compound of tin. In said patent, a low toxicity is claimed which has been improved with respect to the prior art, but still present A detailed description of a method for stabilising soils, through the application of a polyurethanic prepolymer by itself or in a mixture with water is reported in the Patent FR 7121121.

The Patent SU 637484 describes consolidation and water-proofing systems based on phenolic alcohols and benzensulphonic acid and similarly Patent SU 2164852 describes the use of methylol (meta) acrylarnide or copolymers of methylol-crotonamide of a mineral acid or of oxalic acid in combination with Co and Ni salts and water. The

Patents JP 53038118, JP 52100707 and JP 52070521 report descriptions of compositions based on soluble glass (sodium and potassium silicates) mixed with esters of aliphatic or aromatic carboxylic acids or of other organic compounds, said mixtures being used for consolidation of soils and other conglomerates. The material claimed in the Patent JP 7693121 also for uses similar to those stated previously is made up of 60-100 parts by weight of a metacrylic compound characterised by a general formula
CH₂=CRCOO (CH₂ CH₂O)n-H and 0.1-10 parts by weight of an organic compound such as alkylidene-bisacrylamide, 1,3-di(acrylamide)-2- immidazolidone, polyethylenglycol-diacrylate etc., united with a persulphate based catalyst.

Phenolic resins cross-linked to obtain concrete blocks or soil consolidation are reported in the Patent IT 7621888. Alkaline silicates are described in the Patents DE 4236083 and DE 4106515.

Lastly, the Patent FR 2 639 640 describes gelling inhibitors for a series of unsaturated monomers used for soil treatment. Said inhibitors belong to the class of the nitrosophenylhydroxylamines or amino acids.

Document EP-A-0470008 relates to polymerisable aqueous compositions for the consolidation of soils and sealing of subterranean structures.

Said compositions comprise: at least one water-soluble or dispersible monomer of general formula (I): 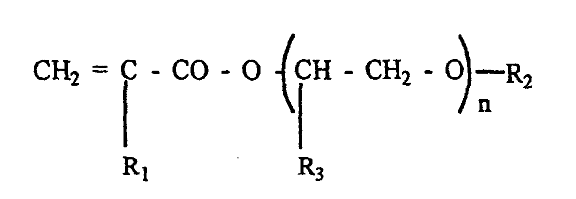 in which:
R₁ denotes a hydrogen atom or methyl radical,
R₂ denotes a methyl or ethyl radical,
R₃ denotes a hydrogen atom or a methyl radical,
n denotes a number from 3 to 6,
at least one initiator chosen from all alkali metal persulphates, ammonium persulphate and hydrogen peroxide, at least one polymerisation accelerator and water.

Document JP 59 157 174 achieves a water-stopping work without causing toxicity problems, by preparing a principal agent composed mainly of acrylic acid and an assistant containing an oxidizing agent and a neutralizing agent, and mixing the principal agent with the assistant in site, thereby forming a water-insoluble polymer of sodium acrylate in the soil.

Document FR 2375288 relates to consolidation or solidification of mining deposits by means of dispersion to be cured, in situ, comprise the following essential constituents:
(a) aqueous dispersion of a vinyl polymer;
(b) one or more water-soluble acrylic monomers; and
(c) one or more compounds or curing agents capable of effecting the polymerisation, in situ, of the acrylic monomer (or monomers).

Document US 4,295,762 relates to a process of stabilizing soil which comprises contacting from about 3 to about 20 parts by weight of such soil with about one part by weight of an aqueous solution of a "water-soluble diacrylate ester of a polyoxyalkylene glycol monomer" having a molecular weight of at least 300, which solution also contains a water-soluble free radical polymerization catalyst capable of polymerizing the monomer into a water-insoluble gel.

Said "water-soluble diacrylate ester of a polyoxyalkylene glycol monomer" is intended to include aqueous solutions which also contain water-soluble comonomers which are capable of copolymerizing with the diacrylate ester. Such water-soluble vinyl monomers are included in the solution in amounts between 2-50% by weight of the diacrylate.

Typical of the vinyl monomers that can be copolymerized with the acrylate diester described above are: acrylamide, methoxyethylacrylate, ethoxyethylacrylate, acrylic acid and its alkali metal and alkaline earth metal salts, and dimethylaminoethylmethacrylate.

The advantages of inorganic systems stem from the fact that they are not harmful to the environment, excluding silicates, which contribute to raise the pH of the soil and of the ground water excessively, given their pronounced alkalinity. Said inorganic products are used mainly in the form of suspensions and they are able to permeate soils with permeability coefficient K of about 10⁻⁴ cm/second. Thus the use of said products is limited to permeable soils such as sandy ones or, at the limit, muddy ones.

To consolidate more compact soils, characterised by a permeability coefficient K < 10⁻⁴ cm/second, it is indispensable to use monophase products, be they of inorganic, organic or mixed nature.

Many of the organic products in use are considered, according to recent legislation, harmful both for operators' health and for environmental pollution. The object of the present invention is to overcome said problems of the prior art, whether their nature be toxicological or ecological.

These advantages and others which shall be exposed further on pertaining to the attainment of the desired technical effect, consisting of the permeation of soil or of cement conglomerates, in order to obtain their consolidation and water-proofing, are obtained through the use of aqueous mixtures of acrylic and metacrylic monomers according to claim 1. The following monomers
1) 2-hydroxyethylmethacrylate (N.CAS 868-77-9)
2) polyethyleneglycolmonoacrylate (N. CAS 9051-31-4)
3) N,N'methylenebisacrylamide,
4) trimethylolpropanetriacrylate-ethoxylate, (N.CAS 75577-70-7)
5) trimethylolpropanetrimethacrylate (N.CAS 3290-92-4)
6) Ditrimetbylolpropanetetraacrylate, (N.CAS 94108-97-1)
7) polyethyleneglycol-400-diacrylate (N.CAS 26570-48-9)
8) polyethertriacrylate,
9) polyethyleneglycol-600-dimethacrylate (N.CAS 25852-47-5)
are classified as irritants, the only one classified as harmful isN,N'-methylenebisacrylamide, but none of them is toxic.

In the mixtures constituting the subject of the present invention the monomers according to claim 1 with starters and accelerators suitably added, can be used mixed together or alone. Dilution of the organic components in water ranges between 1:0 and 1:7 by weight.

The monomers used for the purposes of the present invention are:
polyethyleneglycolmonoacrylate (N. CAS 9051-31-4)
trimethylolpropanetriacrylate-ethoxylate, (N.CAS 75577-70-7)
trimethylolpropanetrimethacrylate (N.CAS 3290-92-4)
Ditrimethylolpropanetetraacrylate, (N.CAS 94108-97-1)
polyethyleneglycol-400-diacrylate (N.CAS 26570-48-9).
polyethertriacrylate,

Preferably, said organic components can be diluted in sea water.

The polymerisation starter is based on sodium or ammonium persulphate.

Triethanolamine, hereinafter indicated as TEA, is used as a catalyst.

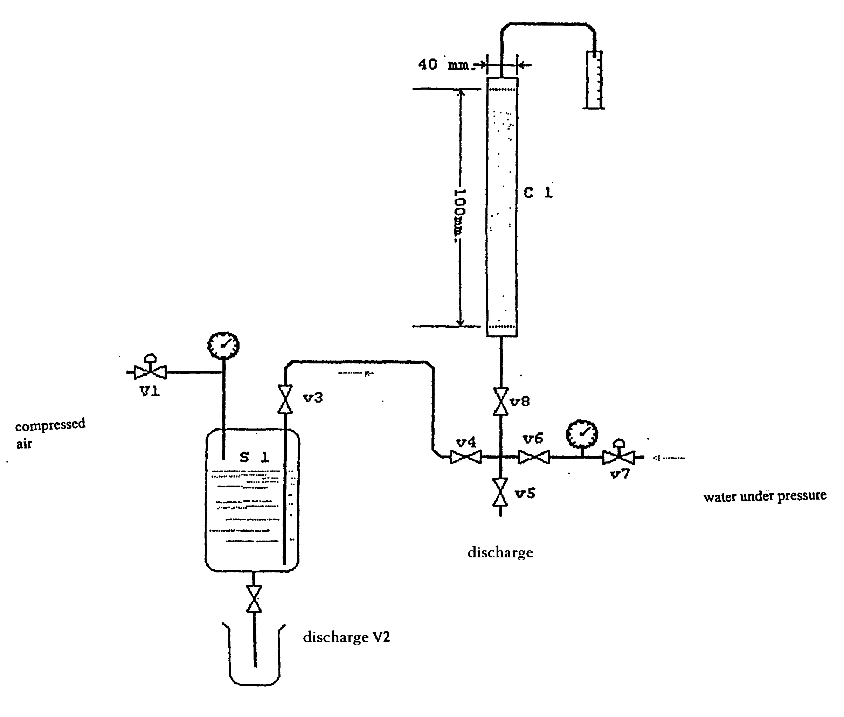

Tests have been conducted using the device shown in the enclosed Figure, wherein the compressed air coming from the valve V1 thrusts the water-gel mixture S1, through the valves v3, v4 and v8 into the cylinder to prepare the test core C1, filled with sand. After the prescribed polymerisation time, water is sent at a pre-set pressure through the valves v7, v6 and v8.

Permeability is determined according to the quantity of water which passes through the core. Measurements can be absolute or compared, conducting tests in the presence or absence of the gel constituting the subject of the present invention.

Note that the set shown in the Figure, through appropriate action on the valves v1, v2, v3, v4, v5, v6, v7 and v8, can allow both the drainage by gravity of the water contained in the cylinder cl through the duct whereon the valve v5 is positioned, and the rinsing of the tank sl and then the drainage of the water-gel mixture through the duct whereon the valve v2 is positioned.

In order to verify the technical, toxicological and ecological aspects of the compositions constituting the subject of the present invention compared with the solutions presented by the prior art, the following sample applications were conducted.

### Example 1

### Formulation: (PPC = Parts Per 100 parts of mixture)

| Monomers: | PPC |
|---|---|
| N-methylolacrylamide | 50 |
| N-N'-methylenbisacrylamide | 2 |
| Water | 48 |
| CATALYST | |
| TEA: 0.5% computed on the 100 parts of monomers. | |
| STARTER: | |
| Sodium persulphate 0.5% computed on the 100 parts of monomers. | |
| Ratio of the total dilution mixture with water 3:1. | |
| Injection test: in sand 75/2500 µm of granulometric distribution. | |
| Tests were successful and the results are summarised in Table 1. | |

### Example 2

### Formulation:

| Monomers: | PPC |
|---|---|
| 2-hydroxyethylmethacrylate | 70 |
| polyethyleneglycolmonoacrylate | 13 |
| Trimethylolpropanetriacrylate-ethoxylate | 3 |
| Water | 17 |
| CATALYST: | |
| TEA: 5% computed on the 100 parts of base monomers | |
| STARTER: | |
| Sodium persulphate 2% computed on the 100 parts of monomers. | |
| Ratio of the total dilution mixture with water 1:1. | |
| Injection test: in sand 75/2500 µm of granulometric distribution. | |
| Tests were successful and the results are summarised in Table 1. | |

### Example 3

### Formulation:

| Monomers: | PPC |
|---|---|
| 2-hydroxyethylmethacrylate | 70 |
| polyethyleneglycolmonoacrylate | 10 |
| Ditrimethylolpropanetetraacrylate | 1 |
| Water | 19 |
| CATALYST: | |
| TEA: 5% computed on the 100 parts of base monomers | |
| STARTER: | |
| Sodium persulphate 2% computed on the 100 parts of base monomers. | |
| Ratio of the total dilution mixture with water 1:1. | |
| Injection test: in sand 75/2500 µm of granulometric distribution. | |
| Tests were successful and the results are summarised in Table 1. | |

### Example 4

### Formulation:

| Monomer: | PPC |
|---|---|
| polyethyleneglycol-400-diacrylate | 90 |
| Water | 10 |
| CATALYST: | |
| TEA: 5% computed on the 100 parts of monomers. | |
| STARTER: | |
| Sodium persulphate 2% computed on the 100 parts of base monomers. | |
| Ratio of the total dilution mixture with water 3:1. | |
| Infection test: in sand 75-200 µm of granulometric distribution. | |

### Example 5

### Formulation:

| Monomer: | PPC |
|---|---|
| polyethertriacrylate | 90 |
| Water | 10 |
| CATALYST: | |
| TEA: 5% computed on the 100 parts of monomers. | |
| STARTER : | |
| Sodium persulphate 2% computed on the 100 pats of base monomers. | |
| Ratio of the total dilution mixture with water 3:1. | |
| Injection test: in sand 75-200 µm of granulometric distribution. | |

### Example 6

### Formulation:

| Monomer: | PPC |
|---|---|
| trimethylolpropanetriacrylate-ethoxylate | 59 |
| Water | 5 |
| CATALYST: | |
| TEA: 5% computed on the 100 parts of monomers. | |
| STARTER: | |
| Sodium persulphate 2% computed on the 100 parts of base monomers. | |
| Ratio of the total dilution mixture with water 3:1. | |
| Injection test: in sand 75-200 µm of granulometric distribution. | |

### Example 7

### Formulation:

| Monomer: | PPC |
|---|---|
| trimethylolpropaneriacrylate-ethoxylate | 59 |
| Water | 5 |
| CATALYST: | |
| TEA: 5% computed on the 100 parts of monomers. | |
| STARTER: | |
| Sodium persulphate 2% computed on the 100 parts of base monomers. | |
| Ratio of the total dilution mixture with sea water 6:1. | |
| Injection test: in sand 75-200 µm of granulometric distribution. | |
| Tests related to Examples 5, 6, 7, 8 were successful and the results are summarised in Table 2. | |

**Table 1**

| (General test conditions: 20°C and 65% Rel. Hum.) | | | |
|---|---|---|---|
| | Example 1 | Example 2 | Example 3 |
| Gel Time | >30 min | 2 minutes | 2 minutes |
| Polym/water separation | negative | Separ. 0.1% water by weight | negative |
| Gel expansion in water | positive | positive | positive |
| 1 meter long core saturation | total | total | total |
| Water passage (*) in the core | negative (1 Atm) | negative (3 Atm) | negative (3 Atm) |
| Compression Resistance(**) | 0.6 MPa | 1.2 MPa | 0.7 MPa |
| CEE/88 and Ministerial Decree 28-1-92 Classification | Toxic Mutagenic | Irritant | Irritant |

| | | | |
|---|---|---|---|
| (*) Permeability is measured after polymerisation at 1 Atm and at 3 Atm and with gradual increases in pressure. | | | |
| (**) Compression resistance is measured on a cube with a 10 cm side of consolidated sand, after 2 days of curing. | | | |

**Table 2**

| (General test conditions: 20°C and 65% Rel. Hum.) | | | |
|---|---|---|---|
| | Example 4 | Example 5 | Example 6 |
| Gel Time 100 seconds | 60 seconds | 42 seconds | 80 seconds |
| Polym/water separation | negative | negative | negative |
| Gel expansion in water | positive | positive | positive |
| 1 meter long core saturation | total | total | total |
| Water passage (*) in the core | negative (3 Atm) | negative (3 Atm) | negative (3 Atm) |
| Compression Resistance(**) | 0.7 MPa | 0.6 MPa | 0.8 MPa |
| CEE/88 and Ministerial Decree 28-1-92 Classification | Irritant | Irritant | Irritant |

| | | | |
|---|---|---|---|
| (*) Permeability is measured after polymerisation at 1 Atm and at 3 Atm and with gradual increases in pressure. | | | |
| (**) Compression resistance is measured on a cube with a 10 cm side of consolidated sand, after 2 days of curing. | | | |

As can be observed, the results which can be obtained with the use of the products mixed according to the present invention are positive both in regard to consolidation, since good compression resistance data are obtained, and in regard to permeability to water and toxicological aspects, excluding example 1 for the latter aspect, reported as a demonstration of a composition which does yield positive results, but cannot be utilised due to toxicological problems.

On the contrary, following the indications of the prior art, negative results are obtained, as is evident from the following Examples, whose results are summarised in Table 3.

### Example 8

### Formulation:

| Monomers: | PPC |
|---|---|
| 2-hydroxyethylmethacrylate | 70 |
| ethyleneglycoldimethacrylate | 5 |
| Water | 25 |
| Starter: | |
| Sodium persulphate 2% computed on the 100 parts of monomers | |
| Catalyst: | |
| TEA: 2% computed on the 100 parts of monomers. | |
| Ratio of the total dilation mixture with water 3:1. | |
| Injection in sand 75/200 µm of granulometric distribution. | |

### Example 9

### Formulation:

| Monomers: | PPC |
|---|---|
| 2-hydroxyethylmethacrylate | 98 |
| Water | 2 |
| Starter: | |
| Sodium persulphate 2% computed on the 100 parts of monomers | |
| Catalyst: | |
| TEA: 1%. computed on the 100 parts of monomers | |
| Ratio of the total dilution mixture with sea water 3:1. | |
| Injection in sand 75/200 µm of granulometric distribution. | |

### Example 10

### Formulation:

| Monomers: | PPC |
|---|---|
| 2-hydroxyethylmethacrylate | 90 |
| N,N'-methylenbisacrylamide | 0.5 |
| Water | 9.5 |
| Starter: | |
| Sodium persulphate 2% computed on the 100 parts of monomers. | |
| Catalyst: | |
| TEA: 5% computed on the 100 parts of monomers. | |
| Ratio of the total dilution mixture with sea water 4:1. | |
| Injection in sand 75/200 µm of granulometric distribution. | |

**Table 3**

| (General test conditions: 20°C and 65% Rel. Hum.) | | | |
|---|---|---|---|
| | Example 8 | Example 9 | Example 10 |
| Gel Time | 7 min | 20 min | 15 min |
| | | | |
| Polym./water separation by weight | Separ.3% water by weight | Separ. 2% water by weight | Separ.4% water by weight |
| | | | |
| 1 meter long core saturation | 70% | 80% | 60% |
| | | | |
| Water passage (*)in the core | ----------- positive (1 Atm) | initial, then negative (1 Atm) | ----------- negative (1 Atm) |
| | | | |
| Compression Resistance(**) | 0.3 MPa | 0.2 MPa | 0.2 MPa |
| | | | |
| CEE/88 and Ministerial Decree 28-1-92 Classification | Irritant | Irritant | Irritant |

| | | | |
|---|---|---|---|
| (*)Permeability is measured after polymerisation at 1 Atm and at 3 Atm and with gradual increases in pressure. | | | |
| (**) Compression resistance is measured on a cube with a 10 cm side of consolidated sand, after 2 days of curing. | | | |

## Claims

1. Acrylic composition for the consolidation of soils and conglomerates in general, cement conglomerates in particular, said consolidation being obtained by the injection of polymerisable reactive chemical products which reduce water permeability and consolidate the permeates, said composition comprising polymerisation starters and triethanolamine as a catalyst and being **characterised in that** said chemical products comprise aqueous mixtures of one or more of the following acrylic and methacrylic monomers:
polyethyleneglycolmonoacrylate
trimethylolpropanetriacrylate-ethoxylate
trimethylolpropanetrimethacrylate
ditrimethylolpropanetetraacrylate
polyethyleneglycol-400-diacrylate
polyethertriacrylate

2. Composition according to claim 1, **characterised in that** the polymerisation starters preferably comprise sodium persulphate.

3. Composition according to claim 1, **characterised in that** the polymerisation starters preferably comprise ammonium persulphate.

4. Composition according to claim 1, **characterised in that** the dilution ratio in water of the organic components preferably ranges up to 1:7 by weight.

5. Composition according to claim 1, **characterised in that** said organic components can be diluted in sea water.

## Patentansprüche

1. Acrylzusammensetzung zur Verfestigung von Böden und Konglomeraten im allgemeinen, insbesondere von Betonkonglomeraten, wobei die Verfestigung durch Einspritzen von polymerisierbaren reaktionsfähigen Chemikalien erhalten wird, die die Wasserdurchlässigkeit verringern und die Permeate verfestigen, wobei diese Zusammensetzung Polymerisationsstarter und Triethanolamin als Katalysator umfasst und **dadurch gekennzeichnet ist, daß** die Chemikalien wässrige Mischungen eines oder mehrerer von den folgenden Methacrylmonomeren enthälen:
Polyethylenglycolmonoacrylat
Trimethylolpropantriacrylat-ethoxylat
Trimethylolpropantrimethacrylat
Ditrimethylolpropantetraacrylat
Polyethylenglycol-400-diacrylat
Polyethertriacrylat.

2. Zusammensetzung nach Anspruch 1, **dadurch gekennzeichnet, daß** die Polymerisationsstarter bevorzugt Natriumpersulfat umfassen.

3. Zusammensetzung nach Anspruch 1, **dadurch gekennzeichnet, daß** die Polymerisationsstarter bevorzugt Ammoniumpersulfat umfassen.

4. Zusammensetzung nach Anspruch 1, **dadurch gekennzeichnet, daß** das Verdünnungsverhältnis der organischen Bestandteilen in Wasser bevorzugt bis 1:7 Gew. beträgt.

5. Zusammensetzung nach Anspruch 1, **dadurch gekennzeichnet, daß** die organischen Bestandteile in Meerwasser verdünnt werden können.

## Revendications

1. Composition acrylique pour la consolidation des sols et de conglomérats en général, en particulier de conglomérats de ciment, ladite consolidation étant obtenue par l'injection de produits chimiques réactifs polymérisables qui réduisent la perméabilité à l'eau et consolident les perméats, ladite composition comprenant des amorceurs de polymérisation et triéthanolamine comme catalyseur et étant **caractérisée en ce que** lesdits produits chimiques comprennent des mélanges aqueux de l'un ou de plusieurs des monomères méthacryliques suivants:
polyéthylèneglycolmonoacrylate
triméthylolpropanetriacrylate-éthoxylate
triméthylolpropanetriméthacrylate
ditriméthylolpropanetétraacrylate
polyéthylèneglycol-400-diacrylate
polyethertriacrylate.

2. Composition selon la revendication 1, **caractérisée en ce que** les amorceurs de polymérisation comprennent préférablement persulfate de sodium.

3. Composition selon la revendication 1, **caractérisée en ce que** les amorceurs de polymérisation comprennent préférablement persulfate d'ammonium.

4. Composition selon la revendication 1, **caractérisée en ce que** le rapport de dilution des composants organiques dans l'eau est préférablement jusqu'à 1:7 en poids.

5. Composition selon la revendication 1, **caractérisée en ce que** lesdits composants organiques peuvent être dilués dans l'eau de mer.
